(19) Europäisches Patentamt / European Patent Office / Office européen des brevets

(11) **EP 3 776 133 B1**

(12) **EUROPEAN PATENT SPECIFICATION**

(45) Date of publication and mention
of the grant of the patent:
**11.05.2022 Bulletin 2022/19**

(21) Application number: **19720272.4**

(22) Date of filing: **12.04.2019**

(51) International Patent Classification (IPC):
***G05D 11/13*** *(2006.01)*

(52) Cooperative Patent Classification (CPC):
**G05D 11/132**

(86) International application number:
**PCT/US2019/027186**

(87) International publication number:
**WO 2019/200237 (17.10.2019 Gazette 2019/42)**

(54) **SYSTEMS AND METHODS FOR DISPENSING MULTI-COMPONENT MATERIALS**

SYSTEME UND VERFAHREN ZUR AUSGABE VON MEHRKOMPONENTENMATERIALIEN

SYSTÈMES ET PROCÉDÉS DE DISTRIBUTION DE MATÉRIAUX MULTI-COMPOSANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2018 US 201862656967 P**

(43) Date of publication of application:
**17.02.2021 Bulletin 2021/07**

(73) Proprietor: **Nordson Corporation
Westlake, OH 44145-1119 (US)**

(72) Inventors:
• **SZUCH, Michael
West Carslbad, CA 92010 (US)**
• **SWENNEN, Tom
3990 Peer (BE)**
• **FRANKEN, Ronny
3650 Dilsen-Stokkem (BE)**
• **LEWIS, Alan, R.
West Carslbad, CA 92010 (US)**

(74) Representative: **Findlay, Alice Rosemary
Reddie & Grose LLP
The White Chapel Building
10 Whitechapel High Street
London E1 8QS (GB)**

(56) References cited:
**US-A- 5 271 521      US-A1- 2002 014 496
US-A1- 2003 158 630      US-A1- 2016 109 888
US-B1- 6 410 080**

## Description

Technical Field

The present disclosure relates generally to dispensing multi-component liquid materials and, more particularly, to systems and methods for precisely controlling the dispensing of multi-component liquid materials to a substrate.

Background

In manufacturing of e.g., printed circuit boards ("PCBs") it is frequently necessary to apply small amounts of vicious materials. Such materials include, for example, general purpose adhesives, solder paste, solder flux, solder mask, grease, oil, encapsulates, potting compounds, epoxies, die attach pastes, silicones, RTV, cyanoacrylates. There exists known methods for automatic control of dispensing of precise amounts of single component materials. Nevertheless, there exists a need for automatic precise control of dispensing amounts and/or ratios for multi-component dispensing operations. US2016/109888A1 relates to a prior art plural component dispensing system which receives separate fluid components, mixes the components in a predetermined ratio, and dispenses the components as a mixture. The system disclosed therein comprises a plurality of positive displacement pumps, each pump for delivering a separate fluid component; a plurality of fluid regulators, each fluid regulator connected to one of the pumps for regulating fluid pressure of one of the fluid components; a plurality of flow meters, each flow meter for measuring flow rate of one of the fluid components; a device for receiving the separate fluid components; and a control system that controls the fluid regulators based on the sensed flow rates to produce a desired ratio of the separate fluid components. US2002/014496A1 relates to a prior art system for metering and dispensing single and plural component liquids and solids. US2003/158630A1 relates to a system for point of use delivery, control and mixing chemical and slurry for a CMP/cleaning system. US5271521A relates to a mixing and dispensing system for mixing and dispensing two-component materials.

Summary

Disclosed herein are systems and methods for dispensing a mixed material onto a substrate. In one embodiment, a method for dispensing a mixed material, which includes at least a first material and a second material, onto a substrate, includes receiving dispensing operating parameters. The method also includes dispensing a first material from a first pump at a first material flow rate and determining an amount of the first material dispensed. The method also includes dispensing a second material from a second pump at a second material flow rate and determining an amount of the second material dispensed. The method also includes automatically adjusting dispensing of the first material to an adjusted first material flow rate and dispensing of the second material to an adjusted second material flow rate based on the determined amounts of the first and second materials dispensed. The method also includes pumping the first material from the first pump at the adjusted first material flow rate. The method also includes pumping the second material from the second pump at the adjusted second material flow rate. The method also includes mixing the first material and the second material within a chamber of a mixer to form the mixed material. The method also includes dispensing the mixed material from a dispensing nozzle onto the substrate.

In another embodiment, a dispense system for dispensing a mixed material, which includes at least a first material and a second material, onto a substrate includes a first supply that is configured to contain the first material. The dispense system also includes a second supply that is configured to contain the second material and a pump system. The pump system includes a first pump having an inlet in fluid communication with the first supply and an outlet, the first pump being configured to pump the first material from the first supply through the outlet of the first pump at a first material flow rate. The pump system also includes a second pump having an inlet in fluid communication with the second supply and an outlet, the second pump being configured to pump the second material from the second supply through the outlet of the second pump at a second material flow rate. The dispense system also includes a mixer that is configured to be connected to the pump system and that includes a first inlet that is configured to be in fluid communication with the outlet of the first pump, a second inlet that is configured to be in fluid communication with the outlet of the second pump, and a chamber configured to mix the first material and the second material therein. The dispense system also includes a dispensing nozzle in fluid communication with the chamber, the dispensing nozzle being configured to dispense the mixed material. The dispense system also includes a sensor that is configured to determine an amount of the first material dispensed and an amount of a second material dispensed. The dispense system also includes a controller that is configured to determine an operating mix ratio of the first material and the second material based on the determined amount of the first material dispensed and the determined amount of the second material dispensed, to determine that the operating mix ratio is outside of a predetermined ratio control range, and to adjust the first material flow rate to an adjusted first material flow rate and the second material flow rate to an adjusted second material flow rate to control operation of the first and second pumps to dispense the mixed material from the dispensing nozzle onto the substrate.

In yet another embodiment, a dispense system for dispensing a mixed material, which includes at least a first material and a second material, onto a substrate, includes a first supply that is configured to contain the first material and a second supply that is configured to contain the second material. The dispense system also includes a pump system including a first inlet in fluid communication with the first supply and a first outlet, and a second inlet in fluid communication with the second supply and a second outlet, the pump system being configured to pump the first material from the first supply through the first outlet at a first material flow rate and to pump the second material from the second supply through the second outlet at a second material flow rate. The dispense system also includes a mixer having a first inlet that is configured to be in fluid communication with the first supply, a second inlet that is configured to be in fluid communication with the second supply, and a chamber configured to mix the first material and the second material therein. The dispense system also includes a dispensing nozzle in fluid communication with the chamber, the dispensing nozzle being configured to dispense the mixed material. The dispense system also includes a sensor that is configured to determine an amount of the mixed material dispensed from the dispensing nozzle. The dispense system also includes a controller that is configured to control operation of the pump system based on the mixed material amount received from the sensor by automatically adjusting the first material flow rate to an adjusted first material flow rate and the second material flow rate to an adjusted second material flow rate based on the mixed material amount to dispense the mixed material from the dispensing nozzle onto the substrate.

In another embodiment, a method for dispensing a mixed material, which includes at least a first material and a second material, onto a substrate, includes receiving dispensing operating parameters. The method also includes calculating a target flow rate for a first material and a target flow rate for a second material based upon the dispensing operating parameters, and setting an initial operating speed of a first pump and an initial operating speed of a second pump based upon the dispensing operating parameters. The method includes dispensing the first material from the first pump operating at the initial operating speed of the first pump, determining an initial operating flow rate of the first material, determining that the initial operating flow rate of the first material is outside of a first predetermined control range, and automatically adjusting the operating speed of the first pump to an adjusted operating speed of the first pump. The method further includes dispensing the second material from the second pump operating at the initial operating speed of the second pump, determining an initial operating flow rate of the second material, determining that the initial operating flow rate of the second material is outside of a second predetermined control range, and automatically adjusting the operating speed of the second pump to an adjusted operating speed of the second pump. The method includes pumping the first material from the first pump at the adjusted operating speed of the first pump, pumping the second material from the second pump at the adjusted operating speed of the second pump, mixing the first material and the second material within a chamber of a mixer to form the mixed material, and dispensing the mixed material from a dispensing nozzle onto the substrate.

Various additional features and advantages of this invention will become apparent to those of ordinary skill in the art upon review of the following detailed description of the illustrative embodiments taken in conjunction with the accompanying drawings.

Brief Description of Drawings

The following detailed description is better understood when read in conjunction with the appended drawings. For the purposes of illustration, examples are shown in the drawings; however, the subject matter is not limited to the specific elements and instrumentalities disclosed. In the drawings:

FIG. 1 illustrates a dispense system in accordance with aspects of the invention;
FIG. 2 illustrates another view of the dispense system of FIG. 1 in accordance with aspects of the invention;
FIG. 3 illustrates yet another view of the dispense system of FIG. 1 in accordance with aspects of the invention;
FIG. 4 illustrates the dispense system in accordance with other aspects of the invention;
FIG. 5 illustrates a schematic view of stations of the dispense system in accordance with aspects of the invention;
FIGS. 6A - 6C illustrate views of a first and second connector of the dispense system in accordance with aspects of the invention;
FIG. 7 illustrates a flow diagram for an exemplary process in accordance with aspects of the invention; and
FIG. 8 illustrates a flow diagram for another exemplary process in accordance with aspects of the invention.

Detailed Description of Illustrative Embodiments

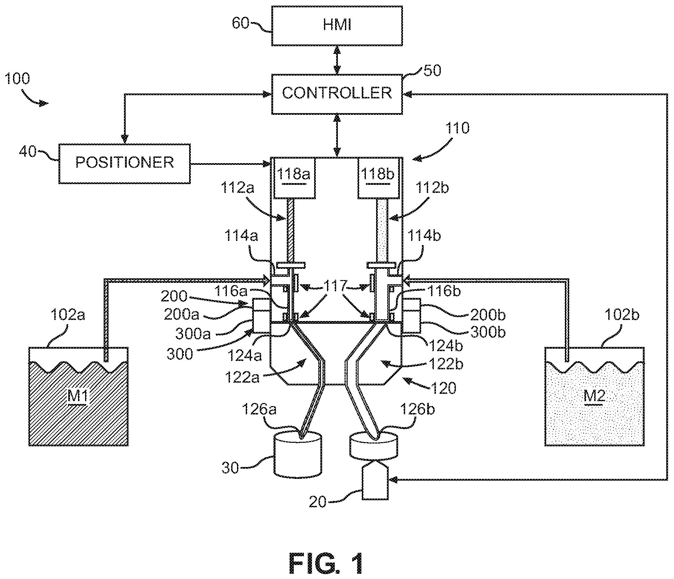

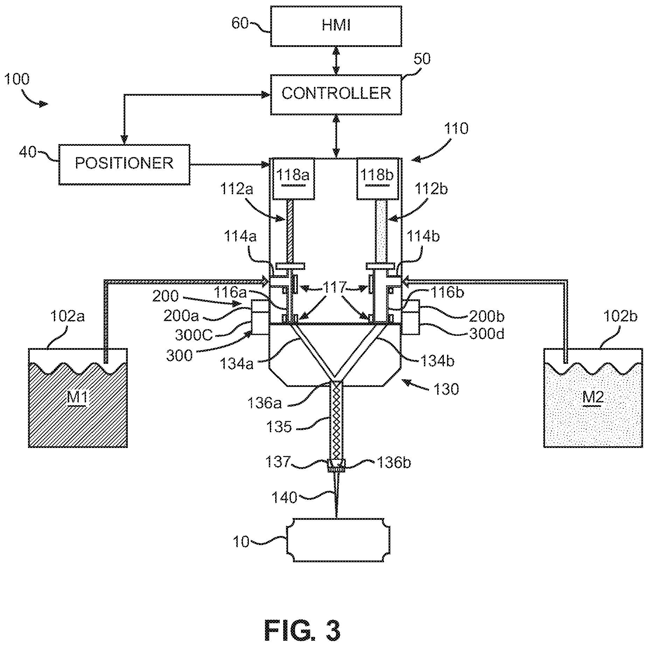

FIGS. 1-4 schematically illustrate aspects of an exemplary dispense system 100 for dispensing mixed material M, which includes at least a first material M1 and a second material M2 onto a substrate 10. The dispense system 100 may include a first supply 102a that may contain the first material M1 and a second supply 102b that may contain the second material M2.

The dispense system 100 may further include a pump system 110. The pump system 110 may include a first pump 112a and a second pump 112b. The first pump 112a may include an inlet 114a in fluid communication with the first supply 102a and an outlet 116a in fluid communication with the inlet 114a of the first pump 112a. The first pump 112a may pump the first material M1 from the first supply 102a through the outlet 116a of the first pump 112a at a first material flow rate. The second pump 112b may include an inlet 114b in fluid communication with the second supply 102b and an outlet 116b in fluid communication with the inlet 114b of the second pump 112b. The second pump 112b may pump the second material M2 from the second supply 102b through the outlet 116b of the second pump 112b at a second material flow rate.

The first and second pumps 112a, 112b may each pump consistent and/or constant amounts of material (i.e., the first material M1 and the second material M2, respectively) from the respective outlets 116a, 116b. The amount of materials pumped from the first and second pumps 112a, 112b may be equivalent or different from each other depending on, e.g., the size and/or pump speed of each of the respective first and second pumps 112a, 112b. The first and second pumps 112a, 112b are, according to the invention, progressive cavity pumps that pump the respective first and second materials M1, M2 at respective first and second pressures/amounts. Accordingly, the respective amounts (e.g., volume) of the first and second materials M1, M2 pumped from the outlets 116a, 116b of the first and second pumps 112a, 112b may be constant. The progressive cavity pumps may produce material feed pressures up to 30 barg (approximately 435.11 psig) at the respective outlets 116a, 116b of the first and second pumps 112a, 112b while requiring comparatively low pressures at the feed. This eliminates the need for high pressure pneumatic systems in dispensing applications requiring a high pressure feed. A representative progressive cavity pump in accordance with aspects of the invention is described in U.S. Appl. No. 15/743,659, published as WO 2017/0023895.

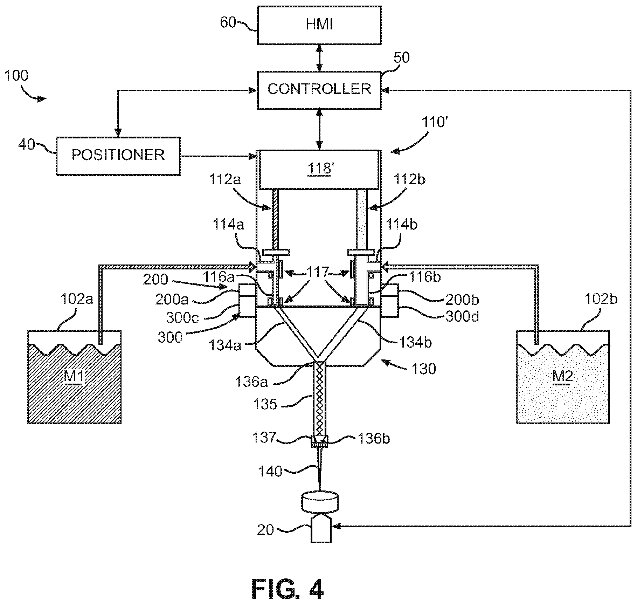

As shown in FIGS. 1-3, the first pump 112a and the second pump 112b may independently pump the respective first and second materials M1, M2 such that a mix ratio between the first material M1 and the second material M2 may be varied. For example, the pump system 110 may include a first motor 118a that may be operatively connected to and may drive the first pump 112a. The pump system 110 may include a second motor 118b that may be operatively connected to and may drive the second pump 112b. By changing the pump speed(s) of at least one of the first and second motors 118a, 118b, the mix ratio may be adjusted. As shown in FIG. 4, the dispense system 100 may include an alternate pump system 110' embodiment that may employ a single motor 118.' The single motor 118' may drive both the first pump 112a and the second pump 112b such that a mix ratio between the first and second materials M1, M2 is fixed based upon the respective relative sizes of the first and second pumps 112a, 112b. Unless explicitly stated otherwise herein, the dispense system 100 including the alternate pump system 110' of the invention may be used with any components or processes described herein that do not require independent drive of the first and second pumps 112a, 112b. The first motor 118a, the second motor 118b, and/or the single motor 118' may include an encoder or other position/rotation/velocity measurement instrument that may measure a rotational speed of the motor to allow for precise motor control.

The pump system 110 may also include at least one sensor. For example, the pump system 110 may include a plurality of pressure sensors 117, such as a resistive transducer, a direct piezo load cell, a resistive diaphragm type, or any other type of sensor that is capable of measuring a fluid pressure and/or converting said fluid pressure into an electrical signal. The pressure sensors 117 may be positioned at the inlets 114a, 114b and/or the outlets 116a, 116b of the first and second pumps 112a, 112b.

As shown in FIG. 1, the dispense system 100 may further include an adapter 120 that may be interchangeably connected to the pump system 110. The adapter 120 may be used to check and/or control the mix ratio between the first material M1 and the second material M2, e.g., as described in the exemplary processes 700, 800 below. The adapter 120 may include a first pathway 122a through which the first material M1 may flow and a second pathway 122b, that is separate and distinct from the first pathway 122a, through which the second material M2 may flow. The first pathway 122a may include a first inlet 124a the may be in fluid communication with outlet 116a of the first pump 112a. The second pathway 122b may include a second inlet 124b that may be in fluid communication with the outlet 116b of the second pump 112b. The first pathway 122a may further include a first outlet 126a in fluid communication with the first inlet 124a of the first pathway 122a and the second pathway 122b may further include a second outlet 126b in fluid communication with the second inlet 124b of the second pathway 122b. Accordingly, the adapter 120 may provide distinct pathways (i.e., the first pathway 122a and the second pathway 122b) through which the first material M1 and the second material M2 may respectively flow without mixing together.

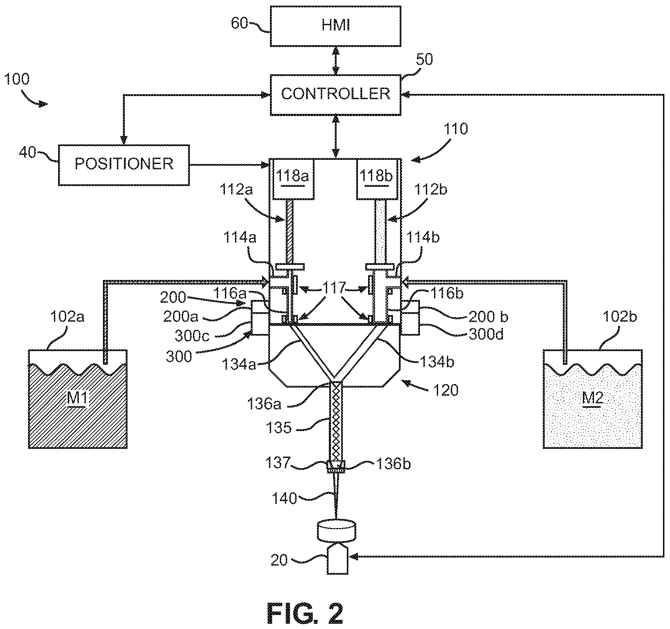

As shown in FIGS. 2-6, the dispense system 100 may also include a mixer 130 that may be interchangeably connected to the pump system 110. The mixer 130 may be interchangeable with the adapter 120, i.e., either the mixer 130 or the adapter 120 may be connected to the pump system 110. The mixer 130 may include a first inlet 134a that may be in fluid communication with the outlet 116a of the first pump 112a and a second inlet 134b that may be in fluid communication with the outlet 116b of the second pump 112b. The mixer 130 may also include a chamber 135, within which the first and second materials M1, M2 may be mixed to form the mixed material M. For example, the chamber 135 may include a first opening 136a in fluid communication with the first inlet 134a and the second inlet 134b of the mixer 130. Accordingly, the first material M1 may flow from the first inlet 134a of the mixer 130 into the chamber 135 and the second material M2 may flow from the second inlet 134b of the mixer 130 into the chamber 135 and the first and second material M1, M2 may mix therein. The chamber 135 may also include a second opening 136b from which the mixed material M may flow out of the chamber 135.

The mixer 130 may include at least one sensor, such as a pressure sensor 137, a resistive transducer, a direct piezo load cell, a resistive diaphragm type, or any other type of sensor that is capable of measuring a fluid pressure and, preferably, converting said fluid pressure into an electrical signal. The pressure sensor 137 may be positioned at the second opening 136b of the chamber 135.

The dispense system 100 may include a first connector 200 and a second connector 300 that may interchangeably connect the pump system 110 to the adapter 120 and/or the mixer 130 to effectuate the interchangeable connection between the pump system 110 and the adapter 120 and/or the mixer 130. In an embodiment of the invention shown in FIGS. 1-4, the first connector 200, which may be two first connectors 200a, 200b positioned at opposing sides of the pump system 110, may be fixed to the pump system 110. Further, the second connector 300 may be fixed to each of the adapter 120 and the mixer 130. For example, the adapter 120 may include two second connectors 300a, 300b fixed thereto, and the mixer 130 may include another two second connectors 300c, 300d fixed thereto; each of which being positioned at opposing sides of the respective adapter 120 and mixer 130. In an alternate embodiment of the invention (not shown), the pump system 110 may include the second connector 300 and the adapter 120 and the mixer 130 may each include the first connector 200. The dispense system 100 may also include a vision and/or sensing system (not shown), that may include cameras or other sensors to enable automatic and/or manual location/detection of the adapter 120 and/or the mixer 130 during interchange.

The dispense system 100 may further include a dispensing nozzle 140. The dispensing nozzle 140 may be in fluid communication with the second opening 136b of the chamber 135 of the mixer 130. The dispensing nozzle 140 may dispense the mixed material M received from the second opening 136b of the chamber 135 of the mixer 130.

The dispense system 100 may also include a scale 20. The scale 20 may determine an amount (e.g., a weight or a mass) of material (e.g., the first material M1, the second material M2, and/or the mixed material) dispensed thereon. The dispense system 100 may also include a container 30. The first material M1 and the second material M2 may separately be dispensed directly onto the scale 20 via the respective first and second pathways 122a, 122b. As shown in FIG. 1, the adapter 120 may be connected to the pump system 110 and the first material M1 may be dispensed through the first pathway 122a onto the scale 20 as the second material M2 is dispensed from the second pathway 122b into the container 30, and vice versa. Further, the mixer 130 may be interchanged with the adapter 120 and connected to the pump system 110 such that the mixed material M may be dispensed from the dispensing nozzle 140 onto the scale 20, as shown in FIGS. 2 and 4.

The dispense system 100 may include a positioner 40. The positioner 40 may move the dispensing nozzle 140 relative to the scale 20, the container 30, and/or the substrate 10 along X, Y, and/or Z axes via, e.g., electromechanical components such as is disclosed in U.S. Pat. No. 5,906,682. For example, the positioner 40 may be operatively connected to the pump system 110, which may be interchangeably connected to either the adapter 120 or the mixer 130 and the dispensing nozzle 140. By moving the pump system 110, the positioner 40 may move the adapter 120 and/or the mixer 130 and the dispensing nozzle 140 attached thereto relative to the scale 20, the container 30, and/or the substrate 10. Alternatively, in embodiments not shown, the pump system 110 may be stationary and the positioner 40 may be connected to the adapter 120 and/or the mixer 130 and the dispensing nozzle 140 to effectuate movement relative to the pump system 110.

The dispense system 100 may also include a controller 50 that may automatically control operation of, e.g., the pump system 110, the first connector 200, the second connector 300, the scale 20, and/or the positioner 40. The controller 50 may be a programmable logic controller (PLC), a microprocessor based controller, personal computer, or another conventional control device capable of carrying out the functions described herein as understood by a person having ordinary skill in the art. For example, the controller 50 may automatically execute aspects of the dispense routine of the processes 700, 800, as described below. The dispense system 100 may also include a human machine interface (HMI) device 60 that may be operatively connected to the controller 50 in a known manner. The HMI device 60 may include input devices and controls, such as a keypad, pushbuttons, control knobs, a touch screen, etc., and output devices, such as displays and other visual indicators, that are used by an operator to control the operation of the controller 50 and, thereby, control the operation of the dispense system 100. The HMI device 60 may further include an audio output device, such as a speaker, by which an audio alert may be communicated to an operator.

The controller 50 may control operation of the first pump 112a to dispense the first material M1 at the first material flow rate onto the scale 20. The controller 50 may control operation of the first pump 112a by manipulating electrical current supplied to the first motor 118a to vary the operating speed thereof. Measurements of the position/velocity of the first motor 118a may be taken by the encoder of the first motor 118a and may be used by the controller 50 for precise control of operation of the first pump 112a. The controller 50 may control operation of the second pump 112b to dispense the second material M2 at the second material flow rate. The controller 50 may control operation of the second pump 112b by manipulating electrical current supplied to the second motor 118b to vary the operating speed thereof. Measurements of the position/velocity of the second motor 118b may be taken by the encoder of the second motor 118b and may be used by the controller 50 for precise control of operation of the second pump 112b. In embodiments of the invention, by independently selectively varying current supplied to the first and second motors 118a, 118b, the controller 50 may variably control the mix ratio of the first and second materials M1, M2. For the alternate pump system embodiment 110,' the controller 50 may control operation of the single motor 118' connected to both the first and second pumps 112a, 112b to control operation of the first and second pumps 112a, 112b by varying electric current supplied to the single motor 118.' Accordingly, the mix ratio between the first material M1 and the second material M2 may be fixed based upon the respective sizes of the first and second pumps 112a, 112b.

The controller 50 may control operation of the pump system 110 such that the first material M1 is pumped from the first supply 102a through the first inlet 134a of the mixer 130 and to the first opening 136a of the chamber 135 at the first material flow rate. The controller 50 may control operation of the pump system 110 such that the second material M2 is pumped from the second supply 102b through the second inlet 134b of the mixer 130 and to the first opening 136a of the chamber 135. Accordingly, the first material M1 and the second material M2 may converge at the first opening 136a of the chamber 135 and mix within the chamber 135 to provide the mixed material M and the mixed material M may flow through the second opening 136b of the chamber 135 and may be dispensed from the dispensing nozzle 140 onto the scale 20.

The scale 20 may determine the amount of the first material M1 dispensed thereon and communicate a first output corresponding to the amount of the first material M1 to the controller 50. The scale 20 may determine the amount of the second material M2 dispensed thereon and communicate a second output corresponding to the amount of the second material M2 to the controller 50. The scale 20 may also determine the amount of the mixed material M dispensed thereon and communicate a mixed material output corresponding to the amount of the mixed material M to the controller 50. The controller 50 may control operation of the pump system 110 (e.g., pump speeds of the first and second pumps 112a, 112b), based upon the outputs received from the controller 50 (e.g., the first output, the second output, and/or the mixed output) to respectively adjust the first material flow rate to an adjusted first material flow rate and the second material flow rate to an adjusted second material flow rate.

The controller 50 may also control operation of the first pump 112a and the second pump 112b to respectively pump the first material M1 at the adjusted first material flow rate and the second material M2 at the adjusted second material flow rate to dispense the mixed material M from the dispensing nozzle 140 onto the substrate 10. The dispensing processes 700, 800, described below, provide additional details regarding automatic control of the dispense system 100 in accordance with aspects of the controller 50 of the present invention.

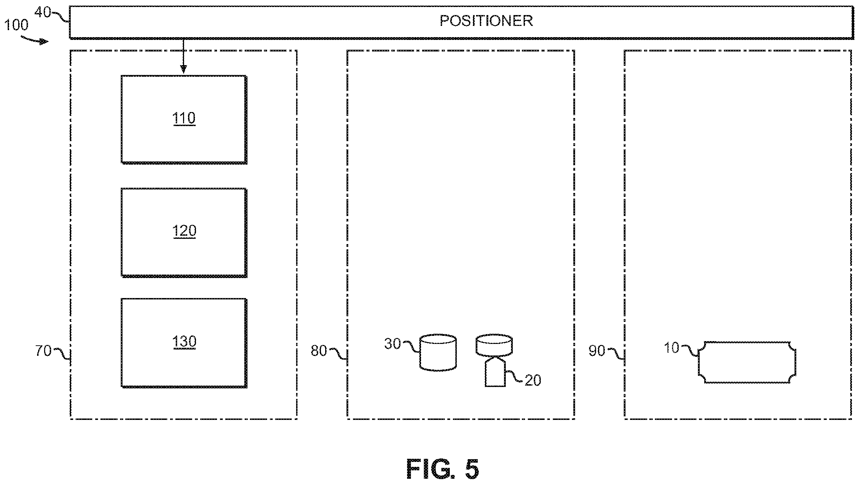

As shown schematically in FIG. 5, the dispense system 100 may include a plurality of stations such as an interchange station 70, a ratio station 80, and/or a dispense station 90. The interchange station 70 may hold and/or store at least one of the adapter 120 and the mixer 130 while not connected to the pump system 110. Alternatively, the adapter 120 may be held and/or stored at the ratio station 80 and/or the mixer 130 may be held and/or stored at the dispense station 90. Still further, a plurality of interchange stations 70 may be provided. One of the plurality of interchange stations 70 may be dedicated to holding/storing the adapter 120 and another of the plurality of interchange stations 70 may be dedicated to holding/storing the mixer 130. In embodiments not shown, the interchange station 70 may hold a plurality of the adapters 120 and/or mixers 130 that may each be selectively automatically connected to the pump system 110.

According to aspects of the invention, the positioner 40 may move the pump system 110 to the interchange station 70 and the pump system 110 may be automatically connected to the adapter 120. The positioner 40 may move the pump system 110, with the adapter 120 connected thereto, to the ratio station 80, which may include the scale 20 and/or the container 30. At the ratio station 80, a mix ratio of the first and/or the second materials M1, M2 may be confirmed and/or controlled, as described in the exemplary processes 700, 800 below. The positioner 40 may move the pump system 110 to the interchange station 70 where the adapter 120 and the mixer 130 may be automatically interchanged. The positioner 40 may move the pump system 110, with the mixer 130 connected thereto, to the dispense station 90, which may include the substrate 10. At the dispense station 90, the mixed material M may be dispensed from the mixer 130 onto the substrate 10.

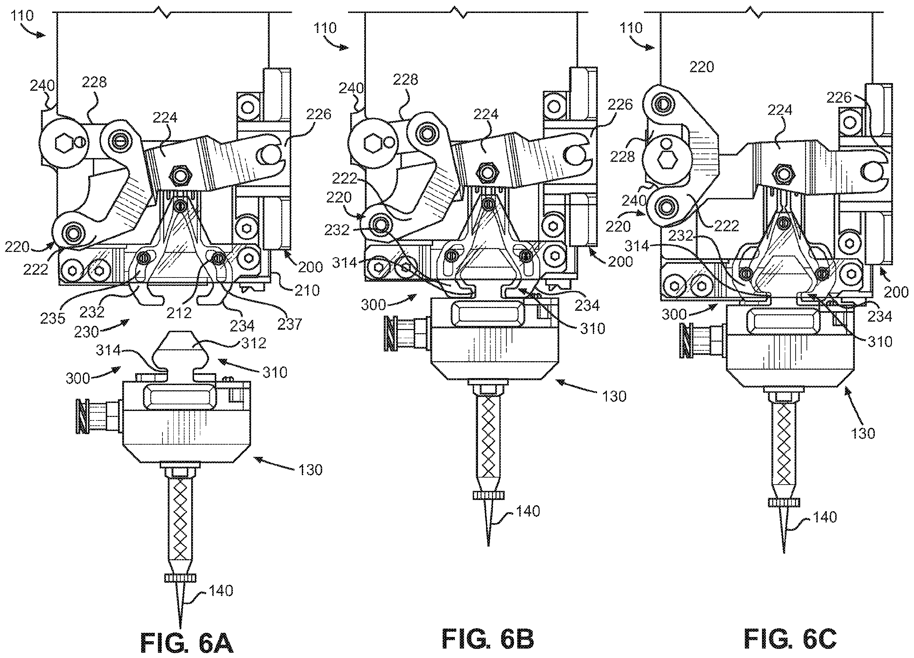

FIGS. 6A-6C depict an exemplary embodiment the first connector 200 and the second connector 300 of the dispense system 100 in accordance with aspects of the invention. FIG. 6A shows the first connector 200 disconnected from the second connector 300. FIG. 6B shows the first connector 200 engaged with the second connector 300. FIG. 6C shows the first connector 200 latched to the second connector 300. In the exemplary embodiment, the first connector 200 is fixed to the pump system 110 and the second connector 300 is fixed to the mixer 130. As discussed above and shown schematically in FIG. 1, the second connector 300 may also similarly be fixed to the adapter 120.

The second connector 300 may include a tab 310 having a head 312 and a narrowed portion 314 disposed between the head 312 and the mixer 130. The second connector 300 may be integrally molded to the mixer 130. Alternatively, the second connector 300 may be fixed to the mixer 130 via a retainer (not shown). Though not shown, the second connector 300 may similarly be integrally molded, or alternatively fixed via a retainer (not shown), to the adapter 120.

The first connector 200 may include a base 210 that may be fixed to the pump system 110. The base 210 may include two pins 212 that project therefrom. The first connector 200 may also include a linkage 220. The linkage 220 may include a first link 222 having a first end and a second end. The linkage 220 may further include a second link 224 having a first end, a second end, and a central portion. The linkage 220 may also include a third link 226 that is slidably connected to the base 210. The third link 226 may be downwardly biased in a vertical direction. For example, the third link 226 may be connected to a spring (not shown) that may supply the downward bias and that may maintain a force on the second connector 300. The third link 226 may include a central portion that the second end of the second link 224 is rotatably connected to. The linkage 220 may also include a fourth link 228 having a first end and a second end. The second end of the fourth link 228 may be rotatably connected to the second end of the first link 222.

The first connector 200 may also include a claw 230. The claw 230 may have a first finger 232 and a second finger 234 that may surround the head 312 of the second connector 300 to effectuate the interchangeable connection between the first connector 200 and the respective second connector 300. Each of the first finger 232 and the second finger 234 may respectively have a first end that is rotatably connected to the central portion of the second link 224, a second end. The second end of the first and second fingers 232, 234 may each include a hook that may connect to the narrowed portion 314 of the respective second connector 300, and a channel 235, 237 configured to respectively receive one of the two pins 212 of the base 210. The channels 235, 237 may respectively reinforce and guide movement of the fingers 232, 234. The downward bias of the third link 226 may be transferred through the second link 224 to bias the claw 230 in an open position, as shown in FIG. 6A. Further, the downward bias of the third link 226 transferred through the second link 224 to the claw 230 may cause the claw 230 to make a "click" sound as the fingers 232, 234 snap in place in the narrowed portion 314 of the second connector 300, as shown in FIG. 6B. By producing a "click" sound when the fingers 232, 234 snap in place in the narrowed portion 314 of the second connector 300, a user may receive audible feedback indicating that the first connector 200 and the second connector 300 are in position for connection.

The first connector 200 may also include an actuator 240, such as a solenoid or a pneumatic actuator. The actuator 240 may be fixed to the pump system 110 and may be rotatably coupled to the first end of the fourth link 228. The actuator 240 may drive the linkage 220 to initiate opening and closing of the claw 230. For example, the actuator 240 may rotate the fourth link 228 counter-clockwise to move the linkage 220 into an over-center cam position to lock the first connector 200 to the second connector 300, as shown in FIG. 6C. Similarly, the actuator 240 may rotate the fourth link 228 clockwise to unlock the first connector 200 and the second connector 300. The actuator 240 may be operatively connected to and subject to control by a controller 50.

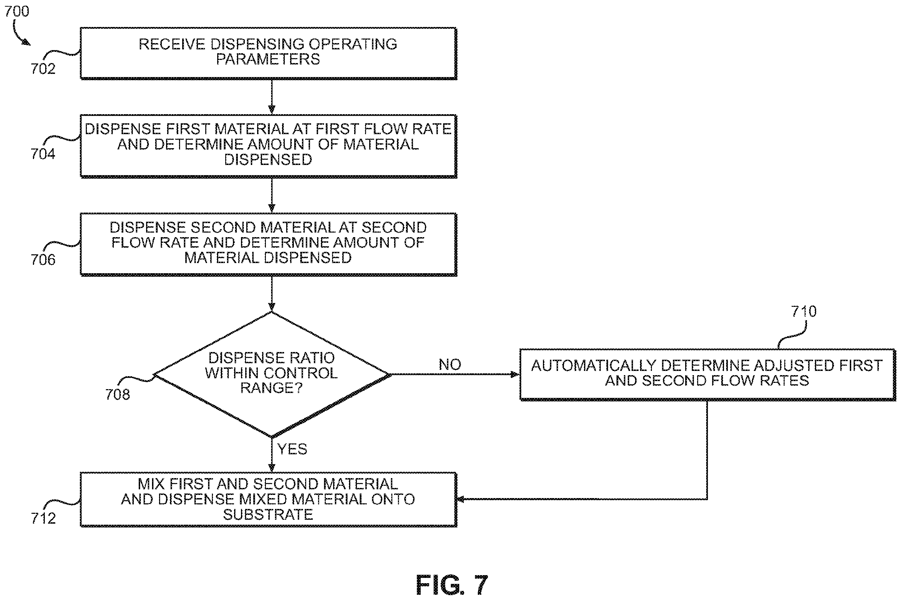

FIG. 7 illustrates a flow diagram of an exemplary process 700 for dispensing the mixed material M, which includes at least the first material M1 and the second material M2, onto the substrate 10. The process 700 may be implemented with any suitable embodiments the dispensing system 100, described above. In addition, the process 700 may be automatically executed by the controller 50. Generally, the process 700 may include a flow control routine (steps 702-712) including receiving dispensing operating parameters, dispensing the first and second materials M1, M2 at respective first and second flow rates and determining the amounts of the first and second materials M1, M2 dispensed. The flow control routine of the process 700 may also include automatically adjusting the pump system 110 to adjusted first and second flow rates for the respective first and second materials M1, M2, and mixing and dispensing the first and second materials M1, M2 onto the substrate 10.

In particular, the process 700 may include, at step 702, receiving dispensing operating parameters for the dispense system 100. For example, a user may enter the operating parameters into the controller 50 via the HMI device 60. The dispensing operating parameters may include, e.g., a first pump constant $C_1$ for the first pump 112a (e.g., a fixed volume of material pumped per rotation of the first pump 112a), a second pump constant $C_2$ for the second pump 112b (e.g., a fixed volume of material pumped per rotation of the second pump 112b), a target mix ratio $R_T$ of the first material M1 and the second material M2 (e.g., by mass or by volume), a density of the first material pi, and/or a density of the second material $\rho_2$.

Step 702 may also include determining an operating speed $\omega_1$ for the first pump 112a and an operating speed $\omega_2$ for the second pump 112b based upon the received dispensing operating parameters. For example, using the received operating parameters for the target mix ratio $R_T$, the first pump constant $C_1$ for the first pump 112a, and the second pump constant $C_2$ for the second pump 112b, the operating speed $\omega_1$ for the first pump 112a and the operating speed $\omega_2$ for the second pump 112b may be selected from any operating speeds that satisfy equation 1 as follows:

$$R_T = \frac{(C_1 * \omega_1)}{(C_2 * \omega_2)}$$

[1]

As would be appreciate by a person having ordinary skill in the art, because the first and second pump constants Ci, $C_2$ may be fixed volumes of material pumped per rotation of the respective first and second pumps 112a, 112b, the target mix ratio $R_T$ used in equation 1 will be a volumetric ratio. If the received target mix ratio $R_T$ is a mass ratio, the process 700 may further include converting the target mix ratio $R_T$ to a volumetric ratio using a ratio of the densities of the first and second materials pi, $\rho_2$. For example, if the target mix ratio $R_T$ is provided as a ratio of the mass Mai of the first material M1 to the mass $Ma_2$ of the second material M2 (i.e. $Ma_1/Ma_2$), the target mix ratio $R_T$ may be converted to a volumetric ratio ($R_{T\text{-Volumetric}}$) by multiplying the mass ratio by the inverse of the density ratio of the first and second materials, as provided in equation 2:

$$R_{T\ Volumetric} = \frac{\rho_2}{\rho_1} * \frac{Ma_1}{Ma_2}$$

[2]

In embodiments, the received target mix ratio $R_T$ may be a volumetric ratio and the process 700 may further include converting the target mix ratio $R_T$ to a mass ratio (e.g., for various dispensing calibration routines) using a ratio of the densities of the first and second materials pi, $\rho_2$. For example, if the target mix ratio $R_T$ is provided as a ratio of the volume Vi of the first material M1 to the volume $V_2$ of the second material M2 (i.e., $V_1/V_2$), the target mix ratio $R_T$ may be converted to a mass ratio ($R_{T\text{-Mass}}$) by multiplying the volumetric ratio by the density ratio of the first and second materials, as provided in equation 3:

$$R_{T\ Mass} = \frac{\rho_1}{\rho_2} * \frac{V_1}{V_2}$$

[3]

As discussed above, the densities of the first and second materials pi, $\rho_2$ may be operating parameters received by the dispense system 100. Alternatively, the process 700 may include determining the respective densities of the first and second materials pi, $\rho_2$. For example, the densities of the first and second materials $\rho_1$, $\rho_2$ may be calculated by measuring a mass of a known volume of material (i.e., the first material M1 and/or the second material M2) that may be dispensed from the dispense system 100, as would be readily understood by a person having ordinary skill in the art.

The process 700 may include, at step 704, dispensing the first material M1 from the first pump 112a at a first material flow rate onto the scale 20 and determining an amount (e.g., a volume, a mass, a weight, etc.) of the first material M1 dispensed onto the scale 20. The first material flow rate may result from operating the first pump 112a at the operating speed $\omega_1$ (as determined at step 702). For example, the controller 50 may automatically control an amount of power supplied to the first motor 118a until the encoder of the first motor 118a indicates that the operating speed $\omega_1$ has been achieved. The dispensing of the first material M1 onto the scale 20 may be performed over a first measurement period.

The process 700 may include, at step 706, dispensing the second material M2 from the second pump 112b at the second material flow rate onto the scale 20 and determining an amount (e.g., a volume, a mass, a weight, etc.) of the second material M2 dispensed onto the scale 20. The second material flow rate may result from operating the second pump 112b at the operating speed $\omega_2$ (as determined at step 702). For example, the controller 50 may automatically control an amount of power supplied to the second motor 118b until the encoder of the second motor 118b indicates that the operating speed $\omega_2$ has been achieved. The dispensing of the second material M2 onto the scale 20 may be performed over a second measurement period. The duration of the first measurement period, during which the first material M1 is dispensed onto the scale 20 at step 704, and the duration of the second measurement period may be equivalent.

The process 700 may further include, at step 708, determining an operating mix ratio $R_{OP}$ of the first material M1 and the second material M2 based upon the amount of the first material M1 dispensed onto the scale 20 over the first measurement period and the amount of the second material M2 dispensed onto the scale 20 over the second measurement period (as determined at steps 704 and 706). The operating mix ratio $R_{OP}$ may be compared to the target mix ratio $R_T$ (as received at step 702). If the operating mix ratio $R_{OP}$ is within a predetermined ratio control range, the process 700 may proceed directly to step 712, described below. However, if the operating mix ratio $R_{OP}$ is outside of the predetermined ratio control range, the process 700 may proceed to step 710, at which the first and second material flow rates are adjusted. The predetermined ratio control range may, for example, be within ±5% of the target mix ratio $R_T$. The predetermined ratio control range may also be within ±1% of the target mix ratio $R_T$.

The process 700 may include, at step 710, adjusting the dispensing of the first material M1 to an adjusted first material flow rate and the dispensing of the second material M2 to an adjusted second material flow rate based upon the amounts of the first and second materials M1, M2 dispensed onto the scale 20 (as determined at steps 704 and 706) and based upon the dispensing operating parameters for the dispense system 100 (as received at step 702). The dispensing of the first and second materials M1, M2 may include proportionally adjusting the first material flow rate and the second material flow rate. For example, the dispensing of the first and second materials M1, M2 may be adjusted from the first and second material flow rates in proportion to the amount that the operating mix ratio $R_{OP}$ is outside of the predetermined ratio control range. The dispensing of the first and second materials M1, M2 may be adjusted by adjusting the operating speeds $\omega_1$, $\omega_2$ of the first and second pumps 112a, 112b. For example, the controller 50 may automatically control an amount of power supplied to the first and second motors 118a, 118b until the encoders of the first and second motor 118a, 118b indicate that desired adjusted operating speeds of the first and second motors 118a, 118b have been achieved. From step 710, the process 700 may proceed directly to step 712, described below. Alternatively, aspects of the process 700 may be iterative. For example, upon completion of step 710 and prior to proceeding to step 712, the process 700 may repeat steps 704-708 at the adjusted first and second material flow rates to confirm that the adjustments brought the operating mix ratio $R_{OP}$ within the predetermined ratio control range.

Upon completion of the flow control routine the process 700 may include, at step 712, pumping the first material M1 from the first pump 112a and pumping the second material M2 from the second pump 112b. If the operating mix ratio $R_{OP}$ is determined to be within the predetermined ratio control range at step 708, the first material M1 and the second material M2 may be pumped at the first and second material flow rates, respectively. If the operating mix ratio $R_{OP}$ is determined to be outside of the predetermined ratio control range, the first material M1 and the second material M2 may be respectively pumped at the adjusted first and second material flow rates (as determined at step 710). Step 712 may further include mixing the first material M1 and the second material M2 within the chamber 135 of the mixer 130 to form the mixed material M and dispensing the mixed material M from the dispensing nozzle 140 onto the substrate 10.

In addition, step 712 may include a verification of the flow rate of the mixed material M from the dispensing nozzle 140. The verification may be performed, for example, prior to dispensing on the substrate 10, after a fixed amount of substrates have been processed, after a fixed period of time, etc. For example, a target mixed material flow rate may be determined by adding the flow rates of the first and second materials M1, M2 utilized for the dispensing of the mixed material M. The process 700 may dispense the mixed material M over a period of time by operating the first and second pumps 112a, 112b, measuring the mass of the mixed material M dispensed for the period of time, and determining an operating mixed material flow rate from the measured mass of the mixed material and the period of time. The target mixed material flow rate may be compared to the determined operating mixed material flow rate. If the determined operating mixed material flow rate exceeds a predetermined flow rate control range, the dispense system 100 may shut down and indicate to a user that there is a system error via the HMI device 60. The predetermined flow rate control range may, for example, be within $\pm 5\%$ of the target mixed material flow rate. The predetermined ratio control range may be within $\pm 1\%$ of the target mixed material flow rate.

Conversely, if the determined operating mixed material flow rate is within the predetermined flow rate control range, the dispense system 100 may calibrate a dispense protocol based upon the determined operating mixed material flow rate. For example, a user may specify and input into the dispense system 100 (via the HMI 60) an amount of the mixed material M (e.g., a volume or mass) to be dispensed onto the substrate 10. The user may also input into the dispense system 100 (via the HMI 60) a predetermined location(s) and/or a line length on the substrate 10 at which the mixed material M is to be dispensed. The dispense system 100 may automatically convert the units (e.g., mass to volume and/or volume to mass) of the amount of the mixed material M to be dispensed onto the substrate 10 and/or of the determined operating mixed material flow rate using the densities of the first and second materials $\rho_1$, $\rho_2$. Units may be automatically converted to ensure that like-units are utilized during calibration of the dispense protocol.

The dispense system 100 may automatically calibrate a dispense protocol based upon the specified amount of the mixed material M to be dispensed onto the substrate 10 and the determined operating mixed material flow rate. For example, the dispense system 100 may automatically calibrate a dispense protocol for dispensing a line of the mixed material M onto the substrate. The automatic calibration may include determining a velocity of the dispense nozzle 140 while the dispense nozzle 140 dispenses the mixed material M at the determined operating mixed material flow rate. Determining the velocity of the dispense nozzle 140 may include multiplying the determined operating mixed material flow rate by a length of the line on the substrate along which the mixed material M is to be dispensed and by a reciprocal of the amount of the mixed material M to be dispensed along the line on the substrate 10. In another example, the dispense system 100 may automatically calibrate a dispense protocol for at least one predetermined location of the substrate 10 (i.e., without moving the dispense nozzle 140 during the dispensing at the predetermined location). The automatic calibration may include determining a time for dispensing the mixed material M at the predetermined location. Determining the time for dispensing the mixed material M at the predetermined location may include dividing the amount of the mixed material M to be dispensed at the predetermined location by the determined operating mixed material flow rate.

Further, step 712 may include monitoring the dispense system 100 during the dispensing of the mixed material M from the dispensing nozzle 140 onto the substrate 10. For example, a system pressure (e.g., a pressure measured at any of the pressure sensors 117, 137) may be monitored and the dispense system 100 may shut down and indicate to a user that there is a system error via the HMI device 60 if the system pressure deviates a predetermined amount from a predetermined system pressure threshold. Similarly, current supplied to any of the motors 118a, 118b, 118' of embodiments of the pump systems 110, 110' may be monitored and the dispense system 100 may shut down and indicate to a user that there is a system error via the HMI device 60 if the current deviates a specified amount from a predetermined current threshold.

According to aspects of the invention, the ratio/amounts of the first and second materials M1, M2 mixed and dispensed onto the substrate 10 may be precisely controlled thereby improving the dispensing of the mixed material M on the substrate 10.

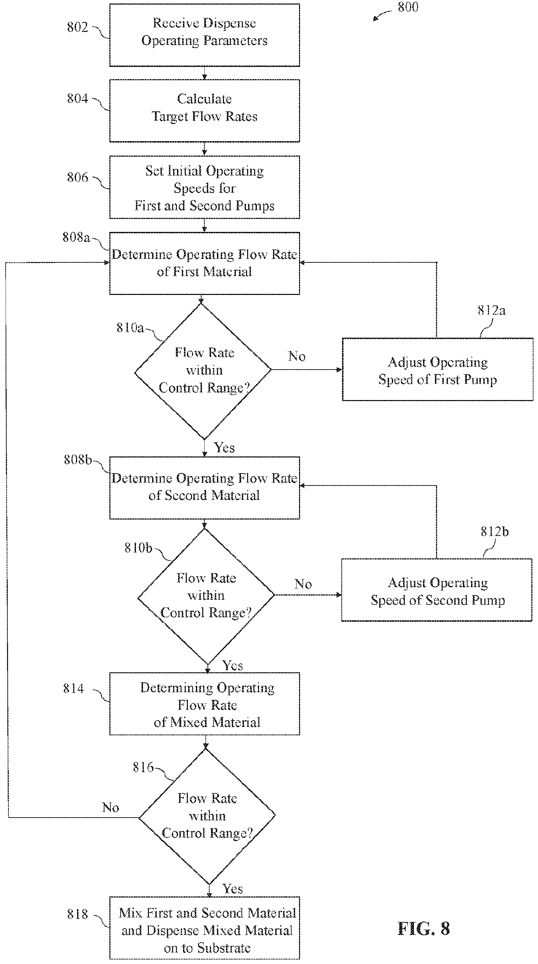

FIG. 8 illustrates a flow diagram of another exemplary process 800 for dispensing the mixed material M, which includes at least the first material M1 and the second material M2, onto the substrate 10. The process 800 may be implemented with any suitable embodiments the dispensing system 100, described above. In addition, the process 800 may be automatically executed by the controller 50. Generally, the process 800 may include a flow control routine (steps 802-818) including receiving dispensing operating parameters, dispensing the first and second materials M1, M2, and determining operating flow rates for the first and second materials M1, M2. The flow control routine of the process 800 may also include automatically adjusting the pump system 110 to adjusted first and second flow rates for the respective first and second materials M1, M2, and mixing and dispensing the first and second materials M1, M2 onto the substrate 10.

In particular, the process 800 may include, at step 802, receiving dispensing operating parameters for the dispense system 100. For example, a user may enter the operating parameters into the controller 50 via the HMI device 60. The dispensing operating parameters may include, e.g., the first pump constant $C_1$ for the first pump 112a, the second pump constant $C_2$ for the second pump 112b, the target mix ratio $R_T$ of the first material M1 and the second material M2, the density of the first material pi, and/or the density of the second material $\rho_2$, as discussed in detail in the description of the process 700 above.

Step 802 may also include determining the operating speed $\omega_1$ for the first pump 112a and the operating speed $\omega_2$ for the second pump 112b based upon the received dispensing operating parameters. As explained above in the description of the process 700 above, using the received operating parameters for the target mix ratio $R_T$, the first pump constant $C_1$ for the first pump 112a, and the second pump constant $C_2$ for the second pump 112b, the operating speed $\omega_1$ for the first pump 112a and the operating speed $\omega_2$ for the second pump 112b may be selected from any operating speeds that satisfy equation 1:

$$[1] \qquad R_T = \frac{(C_1 * \omega_1)}{(C_2 * \omega_2)}$$

As would be appreciated by a person having ordinary skill in the art, because the first and second pump constants Ci, $C_2$ may be fixed volumes of material pumped per rotation of the respective first and second pumps 112a, 112b, the target mix ratio $R_T$ used in equation 1 will be a volumetric ratio. If the received target mix ratio $R_T$ is a mass ratio, the process 800 may further include converting the target mix ratio $R_T$ to a volumetric ratio using a ratio of the densities of the first and second materials pi, $\rho_2$, as explained in detail in the description of the process 700 above. In embodiments, the received target mix ratio $R_T$ may be a volumetric ratio and the process 800 may further include converting the target mix ratio $R_T$ to a mass ratio (e.g., for various dispensing calibration routines) using a ratio of the densities of the first and second materials pi, $\rho_2$, as is also explained in detail in the description of the process 700 above.

The process 800 may also include, at step 804, calculating a target flow rate for the first material M1 and a target flow rate for the second material M2. The target flow rates may, for example, be calculated based upon the dispensing operating parameters (i.e., the first pump constant $C_1$ for the first pump 112a, the second pump constant $C_2$ for the second pump 112b, and the operating speed $\omega_1$ for the first pump 112a and the operating speed $\omega_2$ for the second pump 112b, determined at step 802). The target flow rate for the first material M1 may be calculated by multiplying the first pump constant $C_1$ for the first pump 112a by the operating speed $\omega_1$ for the first pump 112a determined at step 802 (i.e., $C_1 * \omega_1$). The target flow rate for the second material M2 may be calculated by multiplying the second pump constant $C_2$ for the second pump 112b by the operating speed $\omega_2$ for the second pump 112b determined at step 802 (i.e., $C_2 * \omega_2$). Step 804 may further include calculating a target flow rate for the mixed material M. The target flow rate for the mixed material M may be calculated by adding the target flow rate for the first material M1 and the target flow rate for the second material M2.

The process 800 may further include, at step 806, setting initial operating speeds for the first pump 112a and the second pump 112b. The initial operating speeds for the first pump 112a and the second pump 112b may be based upon the dispense operating parameters received at step 802. For example, the operating speed of the first pump 112a may be set to the operating speed $\omega_1$ for the first pump 112a determined at step 802 and the operating speed for the second pump 112b may be set to the operating speed $\omega_2$ for the second pump 112b determined at step 802. As discussed at step 804, the operating speed $\omega_1$ for the first pump 112a determined at step 802 is expected to produce the target flow rate for the first material M1 and the operating speed $\omega_2$ for the second pump 112b determined at step 802 is expected to produce the target flow rate for the second material M2.

The process 800 may include steps for ensuring that an operating flow rate of the first material M1 is within a predetermined control range (steps 808a-812a) and steps for ensuring that an operating flow rate of the second material M2 is within a predetermined control range (steps 808b-812b). Ensuring that the operating flow rate of the first material M1 is within the predetermined control range (steps 808a-812a) may occur before, after, or concurrently with ensuring that the operating flow rate of the second material M2 is within the predetermined control range (steps 808b-812b). For example, according to aspects of the process 800 disclosed in detail below, steps 808a-812a are executed prior to steps 808b-812b. Nevertheless, in accordance with other embodiments of the invention, steps 808b-812b may be executed prior to steps 808a-812a. Further, in accordance with embodiments of the invention, steps 808a-812a may be executed concurrently with steps 808b-812b, provided that the pump system 110 is equipped with the adapter 120 and more than one scale is provided for calculating operating flow rates.

Ensuring that the operating flow rate of the first material M1 is within the predetermined control range may begin, at step 808a, by determining the operating flow rate of the first material M1 (i.e., an initial operating flow rate of the first material or an adjusted operating flow rate of the first material). Determining the operating flow rate of the first material M1 may include dispensing the first material M1 onto the scale 20 and measuring an amount (e.g., a volume, a mass, a weight, etc.) of the first material M1 dispensed onto the scale 20. The first material M1 is dispensed by operating the first pump 112a at an operating speed set at either step 806 (i.e., the operating speed $\omega_1$, which is also referred to as an initial operating speed of the first pump 112a) or step 812a (i.e., an adjusted operating speed of the first pump 112a), described below. For example, the controller 50 may automatically control an amount of power supplied to the first motor 118a until the encoder of the first motor 118a indicates that the set operating speed has been achieved. The pump system 110 may be equipped with the adapter 120 during execution of each of steps 808a-812a. The pump system 110 may be connected with the adapter 120 at any point prior to execution of step 808a. Accordingly, the first material M1 may be pumped by the first pump 112a, through the first pathway 122a, and onto the scale 20. The dispensing of the first material M1 onto the scale 20 may be performed over a first measurement period. The operating flow rate of the first material M1 may be determined by dividing the amount of first material M1 dispensed onto the scale 20 during the first measurement period by the time that elapsed over the first measurement period.

The process 800 may proceed from step 808a to step 810a, at which the process 800 determines whether the operating flow rate of the first material M1 is within the predetermined control range (i.e., a first predetermined control range). If the operating flow rate of the first material M1 is within the predetermined control range, the process 800 may proceed directly to step 808b, described below. However, if the operating flow rate of the first material M1 is outside of the predetermined control range, the process 800 may proceed to step 812a, at which the set operating speed of the first pump 112a is automatically adjusted. The predetermined control range may, for example, be within $\pm 5\%$ of the target flow rate for the first material M1, as calculated at step 804. The predetermined control range may also be within $\pm 1\%$ of the target flow rate for the first material M1, as calculated at step 804.

Step 812a may include automatically adjusting the set operating speed of the first pump 112a to an adjusted operating speed of the first pump 112a. The set operating speed of the first pump 112a may be proportionally adjusted based upon the difference between the operating flow rate of the first material M1 determined at step 808a, and the target flow rate for the first material M1 calculated at step 804. Steps 808a-812a may be iteratively performed until the operating flow rate of the first material M1 is determined to be within the predetermined control range at step 810a.

Ensuring that the operating flow rate of the second material M2 is within the predetermined control range may begin, at step 808b, by determining the operating flow rate of the second material M2 (i.e., an initial operating flow rate of the second material or an adjusted operating flow rate of the second material). Determining the operating flow rate of the second material M2 may include dispensing the second material M2 onto the scale 20 and measuring an amount (e.g., a volume, a mass, a weight, etc.) of the second material M2 dispensed onto the scale 20. The second material M2 is dispensed by operating the second pump 112b at an operating speed set at either step 806 (i.e., the operating speed $\omega_2$, which is also referred to as an initial operating speed the second pump 112b) or step 812b (i.e., an adjusted operating speed of the second pump 112b), described below. For example, the controller 50 may automatically control an amount of power supplied to the second motor 118b until the encoder of the second motor 118b indicates that the set operating speed has been achieved. The adapter 120 may also be connected to the pump system 110 during execution of each of steps 808b-812b. Accordingly, the second material M2 may be pumped by the second pump 112b, through the second pathway 122b, and onto the scale 20. The dispensing of the second material M2 onto the scale 20 may be performed over a second measurement period. The operating flow rate of the second material M2 may be determined by dividing the amount of second material M2 dispensed onto the scale 20 during the second measurement period by the time that elapsed over the second measurement period.

The process 800 may proceed from step 808b to step 810b, at which the process 800 determines whether the operating flow rate of the second material M2 (i.e., the initial operating flow rate of the second material or the adjusted operating flow rate of the second material M2) is within the predetermined control range (i.e., a second predetermined control range). If the operating flow rate of the second material M2 is within the predetermined control range, the process 800 may proceed directly to step 814, described below. However, if the operating flow rate of the second material M2 is outside of the predetermined control range, the process 800 may proceed to step 812b, at which the set operating speed of the second pump 112b is adjusted. The predetermined control range may, for example, be within $\pm 5\%$ of the target flow rate for the second material M2, as calculated at step 804. The predetermined control range may also be within $\pm 1\%$ of the target flow rate for the second material M2, as calculated at step 804.

Step 812b may include automatically adjusting the set operating speed of the second pump 112b to an adjusted operating speed of the second pump 112b. The set operating speed of the second pump 112b may be proportionally adjusted based upon the difference between the operating flow rate of the second material M2 determined at step 808b and the target flow rate for the second material M2 calculated at step 804. Steps 808b-812b may be iteratively performed until the operating flow rate of the second material M2 is determined to be within the predetermined control range at step 810b.

Step 814 may include determining the operating flow rate of the mixed material M. Determining the operating flow rate of the mixed material M may include removing the adapter 120 from the pump system 110 and connecting the mixer 130 to the pump system 110. Once the pump system 110 is connected to the mixer 130, step 814 may include dispensing the mixed material M onto the scale 20 and measuring an amount (e.g., a volume, a mass, a weight, etc.) of the mixed material M dispensed onto the scale 20. The mixed material M is dispensed by operating the first pump 112a at an operating speed set at either step 806 (i.e., the initial operating speed of the first pump 112a) or step 812a (i.e., the adjusted operating speed of the first pump 112a), and by operating the second pump 112b at an operating speed set at either step 806 (i.e., the initial operating speed of the second pump 112b) or step 812b (i.e., the adjusted operating speed of the second pump 112b). The first material M1 and the second material M2 may be respectively pumped by the first pump 112a and the second pump 112b at the set operating speeds, and mixed within the chamber 135 of the mixer 130 to form the mixed material M. From the chamber 135, the mixed material M may be dispensed through the dispensing nozzle 140 onto the scale 20. The dispensing of mixed material M onto the scale 20 may be performed over a third measurement period. The operating flow rate of the mixed material M may be determined by dividing the amount of mixed material M dispensed onto the scale 20 during the third measurement period by the time that elapsed over the third measurement period.

The process 800 may proceed from step 814 to step 816, at which the process 800 determines whether the operating flow rate of the mixed material M is within a predetermined control range (i.e., a third predetermined control range). If the operating flow rate of the mixed material M is within the predetermined control range, the process 800 may proceed directly to step 818, described below. However, if the operating flow rate of the mixed material M (i.e., an initial operating flow rate of the mixed material M) is outside of the predetermined control range, the process 800 may repeat steps 808a-816 (i.e., automatically readjust the operating speed of the first pump 112a and/or the operating speed of the second pump 112b) to troubleshoot the problem. Alternatively, if the determined operating flow rate of the mixed material M exceeds the predetermined control range, the dispense system 100 may shut down and indicate to a user that there is a system error via the HMI device 60. The predetermined control range may, for example, be within $\pm 5\%$ of the target flow rate for the mixed material M, which may be as calculated at step 804 as the summation of the target flow rate for the first material M1 and the target flow rate for the second material M2. The predetermined control range may also be within $\pm 1\%$ of the target flow rate for the mixed material M.

Upon completion of the flow control routine the process 800 may include, at step 818, dispensing the mixed material M onto the substrate 10. The mixed material M is dispensed by operating the first pump 112a at an operating speed set at either step 806 (i.e., the initial operating speed of the first pump 112a) or step 812a (i.e., the adjusted operating speed of the first pump 112a), and by operating the second pump 112b at an operating speed set at either step 806 (i.e., the initial operating speed of the second pump 112b) or step 812b (i.e., the adjusted operating speed of the second pump 112b). The first material M1 and the second material M2 may be respectively pumped by the first pump 112a and the second pump 112b at the set operating speeds, and mixed within the chamber 135 of the mixer 130 to form the mixed material M. From the chamber 135, the mixed material M may be dispensed through the dispensing nozzle 140 onto the substrate 10.

Dispensing the mixed material M onto the substrate 10 at step 818 may include calibrating a dispense protocol based upon the determined operating flow rate of the mixed material M. For example, a user may specify and input into the dispense system 100 (via the HMI 60) an amount of the mixed material M (e.g., a volume or mass) to be dispensed onto the substrate 10. The user may also input into the dispense system 100 (via the HMI 60) a predetermined location(s) and/or a line length on the substrate 10 at which the mixed material M is to be dispensed. The dispense system 100 may automatically convert the units (e.g., mass to volume and/or volume to mass) of the amount of the mixed material M to be dispensed onto the substrate 10 and/or of the operating flow rate of the mixed material M using the densities of the first and second materials $\rho_1$, $\rho_2$. Units may be automatically converted to ensure that like-units are utilized during calibration of the dispense protocol.

Step 818 may also include automatically calibrating a dispense protocol based upon the specified amount of the mixed material M to be dispensed onto the substrate 10 and the determined operating flow rate of the mixed material M. For example, the dispense system 100 may automatically calibrate a dispense protocol for dispensing a line of the mixed material M onto the substrate. The automatic calibration may include determining a velocity of the dispense nozzle 140 while the dispense nozzle 140 dispenses the mixed material M at the determined operating flow rate of the mixed material M. Determining the velocity of the dispense nozzle 140 may include multiplying the determined operating mixed material flow rate by a length of the line on the substrate along which the mixed material M is to be dispensed and by a reciprocal of the amount of the mixed material M to be dispensed along the line on the substrate 10. In another example, the dispense system 100 may automatically calibrate a dispense protocol for at least one predetermined location of the substrate 10 (i.e., without moving the dispense nozzle 140 during the dispensing at the predetermined location). The automatic calibration may include determining a time for dispensing the mixed material M at the predetermined location. Determining the time for dispensing the mixed material M at the predetermined location may include dividing the amount of the mixed material M to be dispensed at the predetermined location by the determined operating flow rate of the mixed material M.

Further, step 818 may include monitoring the dispense system 100 during the dispensing of the mixed material M from the dispensing nozzle 140 onto the substrate 10. For example, a system pressure (e.g., a pressure measured at any of the pressure sensors 117, 137) may be monitored and the dispense system 100 may shut down and indicate to a user that there is a system error via the HMI device 60 if the system pressure deviates a predetermined amount from a predetermined system pressure threshold. Similarly, current supplied to any of the motors 118a, 118b, 118' of embodiments of the pump systems 110, 110' may be monitored and the dispense system 100 may shut down and indicate to a user that there is a system error via the HMI device 60 if the current deviates a specified amount from a predetermined current threshold.

According to aspects of the invention, the ratio and/or amounts of the first and second materials M1, M2 mixed and dispensed onto the substrate 10 may be precisely controlled thereby improving the dispensing of the mixed material M on the substrate 10.

While the disclosure has been described in connection with the various embodiments of the various figures, it is to be understood that other similar embodiments can be used or modifications and additions can be made to the described embodiments. Therefore, the methods and systems as described herein should not be limited to any single embodiment, but rather should be construed in breadth and scope in accordance with the appended claims.

**Claims**

1. A method for dispensing a mixed material (M), which includes at least a first material and a second material, onto a substrate (10), the method comprising:

   receiving dispensing operating parameters;
   dispensing a first material (M1) from a first progressive cavity pump (112a) at a first material flow rate and determining an amount of the first material dispensed, the dispensing of the first material (M1) being performed over a first measurement period;
   dispensing a second material (M2) from a second progressive cavity pump (112b) at a second material flow rate and determining an amount of the second material dispensed, the dispensing of the second material (M2) being performed over a second measurement period;
   determining an operating mix ratio ($R_{OP}$) of the first material (M1) and the second material (M2) based upon the determined amount of the first material (M1) dispensed over the first measurement period and the determined amount of the second material (M2) dispensed over the second measurement period;
   determining that the operating mix ratio ($R_{OP}$) is outside of a predetermined ratio control range;
   automatically adjusting dispensing of the first material (M1) to an adjusted first material flow rate and dispensing of the second material (M2) to an adjusted second material flow rate based on the determined amounts of the first and second materials dispensed and based on the determination of the operating mix ratio ($R_{OP}$) being outside of the predetermined ratio control range;
   pumping the first material (M1) from the first progressive cavity pump (112a) at the adjusted first material flow rate;
   pumping the second material (M2) from the second progressive cavity pump (112b) at the adjusted second material flow rate;
   mixing the first material (M1) and the second material (M2) within a chamber (135) of a mixer (130) to form the mixed material (M); and
   dispensing the mixed material (M) from a dispensing nozzle (140) onto the substrate (10).

2. The method of claim 1, wherein:

   determining the amount of the first material (M1) dispensed comprises determining the amount of the first material dispensed using a scale (20); and

determining the amount of the second material (M2) dispensed comprises determining the amount of the second material dispensed using the scale (20).

3. The method of claim 1, wherein receiving the dispensing operating parameters comprises receiving a first pump constant ($C_1$) for the first progressive cavity pump (112a), a second pump constant ($C_2$) for the second progressive cavity pump (112b), and a target mix ratio ($R_T$) of the first material (M1) and the second material (M2).

4. The method of claim 2, further comprising:
determining a first operating speed for the first progressive cavity pump (112a) and a second operating speed for the second progressive cavity pump (112b) based upon the received dispensing operating parameters, wherein:

   dispensing the first material (M1) from the first progressive cavity pump (112a) at the first material flow rate includes operating the first progressive cavity pump (112a) at the first operating speed for the first progressive cavity pump (112a), and
   dispensing the second material (M2) from the second progressive cavity pump (112b) at the second material flow rate includes operating the second progressive cavity pump (112b) at the second operating speed for the second progressive cavity pump (112b).

5. The method of claim 4, wherein dispensing the first material (M1) is performed over a first measurement period and dispensing the second material (M2) is performed over a second measurement period, a duration of first measurement period being equal to a duration of the second measurement period, and
preferably, further comprising the steps of:

   determining an operating mix ratio ($R_{OP}$) of the first material (M1) and the second material (M2) based upon the determined amount of the first material dispensed over the first measurement period and the determined amount of the second material dispensed over the second measurement period; and
   determining that the operating mix ratio ($R_{OP}$) is outside of a predetermined ratio control range,
   wherein automatically adjusting dispensing of the first and second materials in response to the determination that the operating mix ratio ($R_{OP}$) is outside of the predetermined ratio control range.

6. The method of claim 5, wherein receiving the dispensing operating parameters comprises receiving a density (pi) of the first material (M1) and a density ($\rho_2$) of the second material (M2),
wherein, preferably, the target mix ratio ($R_T$) is a mass ratio, and the method further comprises determining a volumetric target mix ratio from the mass ratio and the densities of the first and second materials, wherein the first operating speed for the first progressive cavity pump (112a) and the second operating speed for the second progressive cavity pump (112b) is further based upon the determined volumetric target mix ratio.

7. The method of claim 1, further comprising:

   monitoring a system pressure;
   determining that the system pressure deviates a predetermined amount from a predetermined system pressure threshold; and
   indicating a system error.

8. The method of claim 1, further comprising:

   monitoring a current supplied to at least one of the first and the second progressive cavity pumps (112a, 112b);
   determining that the current deviates a predetermined amount from a predetermined current threshold; and
   indicating a system error.

9. A dispense system (100) for dispensing a mixed material (M), which includes at least a first material (M1) and a second material (M2), onto a substrate (10), the dispense system comprising:

   a first supply (102a) that is configured to contain the first material (M1);
   a second supply (102b) that is configured to contain the second material (M2);
   a pump system (110) including:

       a first progressive cavity pump (112a) having an inlet in fluid communication with the first supply and an outlet, the first progressive cavity pump (112a) being configured to pump the first material (M1) from the first supply through the outlet of the first progressive cavity pump (112a) at a first material flow rate; and a second progressive cavity pump (112b) having an inlet in fluid communication with the second supply and an outlet, the second progressive cavity pump (112b) being configured to pump the second material (M2) from the second supply through the outlet of the second progressive cavity pump (112b) at a second material flow rate;

a mixer (130) that is configured to be connected to the pump system (110), the mixer (130) including:

a first inlet (124a) that is configured to be in fluid communication with the outlet of the first progressive cavity pump (112a);
a second inlet (124b) that is configured to be in fluid communication with the outlet of the second progressive cavity pump (112b); and
a chamber (135) configured to mix the first material (M1) and the second material (M2) therein;

a dispensing nozzle (140) in fluid communication with the chamber (135), the dispensing nozzle (140) being configured to dispense the mixed material (M);
a sensor that is configured to determine an amount of the first material dispensed and an amount of a second material dispensed; and
a controller (50) that is configured to:

determine an operating mix ratio ($R_{OP}$) of the first material (M1) and the second material (M2) based on the determined amount of the first material dispensed and the determined amount of the second material dispensed;
determining that the operating mix ratio ($R_{OP}$) is outside of a predetermined ratio control range; and respectively adjust the first material flow rate to an adjusted first material flow rate and the second material flow rate to an adjusted second material flow rate to control operation of the first and second progressive cavity pumps (112b) to dispense the mixed material (M) from the dispensing nozzle (140) onto the substrate (10).

10. The dispense system (100) of claim 9, wherein the sensor is a scale (20).

11. The dispense system (100) of claim 10, wherein the controller (50) is configured to:

control operation of the first progressive cavity pump (112a) to dispense the first material (M1) onto the scale (20) and receive the amount of the first material from the scale; and
control operation of the second progressive cavity pump (112b) to dispense the second material (M2) onto the scale (20) and receive the amount of the second material from the scale.

12. The dispense system (100) of claim 9, wherein the first progressive cavity pump (112a) and the second progressive cavity pump (112b) are configured to independently pump the respective first and second materials such that the mix ratio between the first material (M1) and the second material (M2) is configured to be varied.

13. The dispense system (100) of claim 9, wherein the pump system (110) comprises a first motor that is configured to drive the first progressive cavity pump (112a) and a second motor that is configured to drive the second progressive cavity pump (112b), and the controller (50) is configured to control the first and second motors.

14. The dispense system (100) of claim 9, further comprising an adapter that is configured to be removably connected to the pump system (110), the adapter including:

a first inlet (124a) that is configured to be in fluid communication with the outlet of the first progressive cavity pump (112a);
a second inlet (124b) that is configured to be in fluid communication with the outlet of the second progressive cavity pump (112b);
a first outlet (126a); and
a second outlet (126b),
wherein the mixer (130) and the adapter are configured to be interchangeably connected to the pump system (110).

**15.** The dispense system (100) of claim 14, further comprising:

a first connector (200) fixed to the pump system (110); and

two second connectors (300) that are each configured to be interchangeably connected to the first connector (200), one of the two second connectors being fixed to the mixer (130) and the other of the two second connectors (300) being fixed to the adapter,

wherein, preferably, the controller (50) is further configured to control operation of the first connector (200) to automatically control interchangeable connection between the pump system (110) and the adapter or the mixer (130), and

preferably, the system further comprising a claw (230) configured to surround part of each of the two second connectors (300) to effectuate the interchangeable connection between the first connector (200) and the two second connectors (300); and an actuator (240) configured to initiate opening and closing of the claw (230) in response to the controller (50).

**Patentansprüche**

**1.** Verfahren zum Ausgeben eines gemischten Materials (M), das wenigstens ein erstes Material und ein zweites Material umfasst, wobei das Verfahren aufweist:

Empfangen von Ausgabebetriebsparametern;

Ausgeben eines ersten Materials (M1) aus einer ersten Exzenterschneckenpumpe (112a) mit einer ersten Materialdurchflussgeschwindigkeit und Bestimmen einer Menge des ersten ausgegebenen Materials, wobei das Ausgeben des ersten Materials (M1) über einen ersten Messzeitraum durchgeführt wird;

Ausgeben eines zweiten Materials (M2) aus einer zweiten Exzenterschneckenpumpe (112b) mit einer zweiten Materialdurchflussgeschwindigkeit und Bestimmen einer Menge des zweiten ausgegebenen Materials, wobei das Ausgeben des zweiten Materials (M2) über einen zweiten Messzeitraum durchgeführt wird;

Bestimmen eines Betriebsmischungsverhältnisses ($R_{op}$) des ersten Materials (M1) und des zweiten Materials (M2) auf Basis der bestimmten, über den ersten Messzeitraum ausgegebenen Menge des ersten Materials (M1) und der bestimmten, über den zweiten Messzeitraum ausgegebenen Menge des zweiten Materials (M2) ;

Bestimmen, dass das Betriebsmischungsverhältnis ($R_{op}$) außerhalb eines vorbestimmten Verhältnisregelbereichs liegt;

automatisches Einstellen der Ausgabe des ersten Materials (M1) auf eine eingestellte erste Materialdurchflussgeschwindigkeit und der Ausgabe des zweiten Materials (M2) auf eine eingestellte zweite Materialdurchflussgeschwindigkeit auf Basis der bestimmten ausgegebenen Mengen des ersten und des zweiten Materials und auf Basis des Bestimmens, dass das Betriebsmischungsverhältnis ($R_{op}$) außerhalb des vorbestimmten Verhältnisregelbereichs liegt;

Fördern des ersten Materials (M1) mit der eingestellten ersten Materialdurchflussgeschwindigkeit aus der ersten Exzenterschneckenpumpe (112a);

Fördern des zweiten Materials (M2) mit der eingestellten zweiten Materialdurchflussgeschwindigkeit aus der zweiten Exzenterschneckenpumpe (112b);

Mischen des ersten Materials (M1) und des zweiten Materials (M2) in einer Kammer (135) eines Mischers (130) zum Bilden des gemischten Materials (M); und

Ausgeben des gemischten Materials (M) aus einer Ausgabedüse (140) auf das Substrat (10).

**2.** Verfahren nach Anspruch 1, wobei:

das Bestimmen der ausgegebenen Menge des ersten Materials (M1) das Bestimmen der ausgegebenen Menge des ersten Materials unter Verwendung einer Waage (20) aufweist; und

das Bestimmen der ausgegebenen Menge des zweiten Materials (M2) das Bestimmen der ausgegebenen Menge des zweiten Materials unter Verwendung der Waage (20) aufweist.

**3.** Verfahren nach Anspruch 1, wobei das Empfangen der Ausgabebetriebsparameter das Empfangen einer ersten Pumpenkonstante ($C_1$) für die erste Exzenterschneckenpumpe (112a), einer zweiten Pumpenkonstante ($C_2$) für die zweite Exzenterschneckenpumpe (112b) und eines Soll-Mischungsverhältnisses ($R_T$) des ersten Materials (M1) und des zweiten Materials (M2) aufweist.

**4.** Verfahren nach Anspruch 2, das ferner aufweist:

Bestimmen einer ersten Betriebsgeschwindigkeit für die erste Exzenterschneckenpumpe (112a) und einer zweiten Betriebsgeschwindigkeit für die zweite Exzenterschneckenpumpe (112b) auf Basis der empfangenen Ausgabebetriebsparameter, wobei:

das Ausgeben des ersten Materials (MI) aus der ersten Exzenterschneckenpumpe (112a) mit der ersten Materialdurchflussgeschwindigkeit das Betreiben der ersten Exzenterschneckenpumpe (112a) mit der ersten Betriebsgeschwindigkeit für die erste Exzenterschneckenpumpe (112a) umfasst und
das Ausgeben des zweiten Materials (M2) aus der zweiten Exzenterschneckenpumpe (112b) mit der zweiten Materialdurchflussgeschwindigkeit das Betreiben der zweiten Exzenterschneckenpumpe (112b) mit der zweiten Betriebsgeschwindigkeit für die zweite Exzenterschneckenpumpe (112b) umfasst.

5. Verfahren nach Anspruch 4, wobei das Ausgeben des ersten Materials (M1) über einen ersten Messzeitraum durchgeführt wird und das Ausgeben des zweiten Materials (M2) über einen zweiten Messzeitraum durchgeführt wird, wobei eine Dauer des ersten Messzeitraums gleich einer Dauer des zweiten Messzeitraums ist, und das vorzugsweise ferner die folgenden Schritte aufweist:

Bestimmen eines Betriebsmischungsverhältnisses ($R_{op}$) des ersten Materials (MI) und des zweiten Materials (M2) auf Basis der bestimmten, über den ersten Messzeitraum ausgegebenen Menge des ersten Materials und der bestimmten, über den zweiten Messzeitraum ausgegebenen Menge des zweiten Materials; und
Bestimmen, dass das Betriebsmischungsverhältnis ($R_{OP}$) außerhalb eines vorbestimmten Verhältnisregelbereichs liegt,
wobei die Ausgabe des ersten und des zweiten Materials als Reaktion auf die Bestimmung, dass das Betriebsmischungsverhältnis ($R_{OP}$) außerhalb des vorbestimmten Verhältnisregelbereichs liegt, automatisch eingestellt wird.

6. Verfahren nach Anspruch 5, wobei das Empfangen der Ausgabebetriebsparameter das Empfangen einer Dichte (pi) des ersten Materials (M1) und einer Dichte ($\rho_2$) des zweiten Materials (M2) aufweist, wobei vorzugsweise das Soll-Mischungsverhältnis ($R_T$) ein Masseverhältnis ist und das Verfahren ferner das Bestimmen eines volumetrischen Soll-Mischungsverhältnisses anhand des Masseverhältnisses und der Dichten des ersten und des zweiten Materials aufweist, wobei die erste Betriebsgeschwindigkeit für die erste Exzenterschneckenpumpe (112a) und die zweite Betriebsgeschwindigkeit für die zweite Exzenterschneckenpumpe (112b) ferner auf dem bestimmten volumetrischen Soll-Mischungsverhältnis basiert.

7. Verfahren nach Anspruch 1, das ferner aufweist:

Überwachen eines Systemdrucks;
Bestimmen, dass der Systemdruck um ein vorbestimmtes Maß von einem vorbestimmten Systemdruckschwellenwert abweicht; und
Anzeigen eines Systemfehlers.

8. Verfahren nach Anspruch 1, das ferner aufweist:

Überwachen eines Stroms, der wenigstens einer von der ersten und der zweiten Exzenterschneckenpumpe (112a, 112b) zugeführt wird;
Bestimmen, dass der Strom um ein vorbestimmtes Maß von einem vorbestimmten Stromschwellenwert abweicht; und
Anzeigen eines Systemfehlers.

9. Ausgabesystem (100) zum Ausgeben eines gemischten Materials (M), das wenigstens ein erstes Material (M1) und ein zweites Material (M2) umfasst, auf ein Substrat (10), wobei das Ausgabesystem aufweist:

einen ersten Vorrat (102a), der zum Enthalten des ersten Materials (M1) gestaltet ist;
einen zweiten Vorrat (102b), der zum Enthalten des zweiten Materials (M2) gestaltet ist;
ein Pumpensystem (110), das umfasst:

eine erste Exzenterschneckenpumpe (112a) mit einem Einlass, der mit dem ersten Vorrat in Fluidverbindung ist, und einem Auslass, wobei die erste Exzenterschneckenpumpe (112a) zum Fördern des ersten Materials (M1) mit einer ersten Materialdurchflussgeschwindigkeit aus dem ersten Vorrat durch den Auslass der ersten Exzenterschneckenpumpe (112a) gestaltet ist; und

eine zweite Exzenterschneckenpumpe (112b) mit einem Einlass, der mit dem zweiten Vorrat in Fluidverbindung ist, und einem Auslass, wobei die zweite Exzenterschneckenpumpe (112b) zum Fördern des zweiten Materials (M2) mit einer zweiten Materialdurchflussgeschwindigkeit aus dem zweiten Vorrat durch den Auslass der zweiten Exzenterschneckenpumpe (112b) gestaltet ist;

einen Mischer (130), der gestaltet ist, um mit dem Pumpensystem (110) verbunden zu sein, wobei der Mischer (130) umfasst:

einen ersten Einlass (124a), der gestaltet ist, um mit dem Auslass der ersten Exzenterschneckenpumpe (112a) in Strömungsverbindung zu sein;
einen zweiten Einlass (124b), der gestaltet ist, um mit dem Auslass der zweiten Exzenterschneckenpumpe (112a) in Fluidverbindung zu sein;
eine Kammer (135), die zum Mischen des ersten Materials (M1) und des zweiten Materials (M2) in ihr gestaltet ist;

eine Ausgabedüse (140), die in Fluidverbindung mit der Kammer (135) ist, wobei die Ausgabedüse (140) zum Ausgeben des gemischten Materials (M) gestaltet ist;
einen Sensor, der zum Bestimmen einer Menge des ausgegebenen ersten Materials und einer Menge des zweiten ausgegebenen Materials gestaltet ist; und
eine Steuerung (50), die gestaltet ist zum:

Bestimmen eines Betriebsmischungsverhältnisses ($R_{op}$) des ersten Materials (M1) und des zweiten Materials (M2) auf Basis der bestimmten Menge des ersten ausgegebenen Materials und der bestimmten Menge des zweiten ausgegebenen Materials;
Bestimmen, dass das Betriebsmischungsverhältnis ($R_{op}$) außerhalb eines vorbestimmten Verhältnisregelbereichs liegt; und
Einstellen der ersten Materialdurchflussgeschwindigkeit auf eine eingestellte erste Materialdurchflussgeschwindigkeit bzw. der zweiten Materialdurchflussgeschwindigkeit auf eine eingestellte zweite Materialdurchflussgeschwindigkeit zum Steuern des Betriebs der ersten und der zweiten Exzenterschneckenpumpe (112b), um das gemischte Material (M) aus der Ausgabedüse (140) auf das Substrat (10) auszugeben.

10. Ausgabesystem (100) nach Anspruch 9, wobei der Sensor eine Waage (20) ist.

11. Ausgabesystem (100) nach Anspruch 10, wobei die Steuerung (50) gestaltet ist zum:

Steuern des Betriebs der ersten Exzenterschneckenpumpe (112a) zum Ausgeben des ersten Materials (M1) auf die Waage (20) und Empfangen der Menge des ersten Materials von der Waage; und
Steuern des Betriebs der zweiten Exzenterschneckenpumpe (112b) zum Ausgeben des zweiten Materials (M2) auf die Waage (20) und Empfangen der Menge des zweiten Materials von der Waage.

12. Ausgabesystem (100) nach Anspruch 9, wobei die erste Exzenterschneckenpumpe (112a) und die zweite Exzenterschneckenpumpe (112b) zum unabhängigen Fördern des ersten bzw. des zweiten Materials gestaltet sind, so dass das Mischungsverhältnis zwischen dem ersten Material (M1) und dem zweiten Material (M2) so gestaltet ist, dass es geändert werden kann.

13. Ausgabesystem (100) nach Anspruch 9, wobei das Pumpensystem (110) einen ersten Motor, der zum Antreiben der ersten Exzenterschneckenpumpe (112a) gestaltet ist, und einen zweiten Motor, der zum Antreiben der zweiten Exzenterschneckenpumpe (112b) gestaltet ist, aufweist und die Steuerung (50) zum Steuern des ersten und des zweiten Motors gestaltet ist.

14. Ausgabesystem (100) nach Anspruch 9, das ferner einen Adapter umfasst, der gestaltet ist, um abnehmbar mit dem Pumpensystem (110) verbunden zu sein, wobei der Adapter umfasst:

einen ersten Einlass (124a), der gestaltet ist, um mit dem Auslass der ersten Exzenterschneckenpumpe (112a) in Fluidverbindung zu sein;
einen zweiten Einlass (124b), der gestaltet ist, um mit dem Auslass der zweiten Exzenterschneckenpumpe (112b) in Fluidverbindung zu sein;

einen ersten Auslass (126a); und

einen zweiten Auslass (126b),

wobei der Mischer (130) und der Adapter gestaltet sind, um austauschbar mit dem Pumpensystem (110) verbunden zu sein.

**15.** Ausgabesystem (100) nach Anspruch 14, ferner umfassend:

einen ersten Verbinder (200), der an dem Pumpensystem (110) befestigt ist; und

zwei zweite Verbinder (300), die jeweils gestaltet sind, um austauschbar mit dem ersten Verbinder (200) verbunden zu sein, wobei einer der zwei zweiten Verbinder an dem Mischer (130) befestigt ist und der andere der zwei zweiten Verbinder (300) an dem Adapter befestigt ist,

wobei vorzugsweise die Steuerung (50) ferner zum Steuern des Betriebs des ersten Verbinders (200) zum automatischen Steuern des ersten Verbinders (200) gestaltet ist, um die austauschbare Verbindung zwischen dem Pumpensystem (110) und dem Adapter oder dem Mischer (130) automatisch zu steuern, und

vorzugsweise das System ferner eine Klaue (230) umfasst, die gestaltet ist, um Teil von jedem der zwei zweiten Verbinder (300) zu umgeben, um die austauschbare Verbindung zwischen dem ersten Verbinder (200) und den zwei zweiten Verbindern (300) zu bewirken; und einen Aktuator (240), der zum Einleiten des Öffnens und Schließens der Klaue (230) als Reaktion auf die Steuerung (50) gestaltet ist.

## Revendications

**1.** Procédé de distribution d'un matériau mixte (M), qui comprend au moins un premier matériau et un second matériau, sur un substrat (10), le procédé comprenant :

la réception de paramètres opérationnels de distribution ;

la distribution d'un premier matériau (M1) à partir d'une première pompe à cavité progressive (112a) à un premier débit de matériau et la détermination d'une quantité du premier matériau distribué, la distribution du premier matériau (M1) étant réalisée durant une première période de mesure ;

la distribution d'un second matériau (M2) à partir d'une seconde pompe à cavité progressive (112b) à un second débit de matériau et la détermination d'une quantité du second matériau distribué, la distribution du second matériau (M2) étant réalisée durant une seconde période de mesure ;

la détermination d'un rapport de mélange opérationnel ($R_{OP}$) du premier matériau (M1) et du second matériau (M2) en fonction de la quantité déterminée du premier matériau (M1) distribué au cours de la première période de mesure et de la quantité déterminée du second matériau (M2) distribué au cours de la seconde période de mesure ;

la détermination que le rapport de mélange opérationnel ($R_{OP}$) est en dehors d'une plage de commande de rapport prédéterminée ;

l'ajustement automatique de la distribution du premier matériau (M1) à un premier débit de matériau ajusté et la distribution du second matériau (M2) à un second débit de matériau ajusté en fonction des quantités déterminées des premier et second matériaux distribués et en fonction de la détermination du rapport de mélange opérationnel ($R_{OP}$) en dehors de la plage de commande de rapport prédéterminée ;

le pompage du premier matériau (M1) à partir de la première pompe à cavité progressive (112a) au premier débit de matériau ajusté ;

le pompage du second matériau (M2) à partir de la seconde pompe à cavité progressive (112b) au second débit de matériau ajusté ;

le mélange du premier matériau (M1) et du second matériau (M2) dans une chambre (135) d'un mélangeur (130) pour former le matériau mixte (M) ; et

la distribution du matériau mixte (M) à partir d'une buse de distribution (140) sur le substrat (10).

**2.** Procédé selon la revendication 1, dans lequel :

la détermination de la quantité du premier matériau (M1) distribué comprend la détermination de la quantité du premier matériau distribué à l'aide d'une balance (20) ; et

la détermination de la quantité du second matériau (M2) distribué comprend la détermination de la quantité du second matériau distribué à l'aide de la balance (20).

**3.** Procédé selon la revendication 1, dans lequel la réception des paramètres opérationnels de distribution comprend la réception d'une première constante de pompe ($C_1$) pour la première pompe à cavité progressive (112a), d'une seconde constante de pompe ($C_2$) pour la seconde pompe à cavité progressive (112b), et d'un rapport de mélange cible ($R_T$) du premier matériau (M1) et du second matériau (M2).

4.  Procédé selon la revendication 2, comprenant en outre :
    la détermination d'une première vitesse de fonctionnement pour la première pompe à cavité progressive (112a) et d'une seconde vitesse de fonctionnement pour la seconde pompe à cavité progressive (112b) en fonction des paramètres opérationnels de distribution reçus, dans lequel :

    la distribution du premier matériau (M1) à partir de la première pompe à cavité progressive (112a) au premier débit de matériau comprend le fonctionnement de la première pompe à cavité progressive (112a) à la première vitesse de fonctionnement de la première pompe à cavité progressive (112a), et
    la distribution du second matériau (M2) à partir de la seconde pompe à cavité progressive (112b) au second débit de matériau comprend le fonctionnement de la seconde pompe à cavité progressive (112b) à la seconde vitesse de fonctionnement de la seconde pompe à cavité progressive.

5.  Procédé selon la revendication 4, dans lequel la distribution du premier matériau (M1) est réalisée durant une première période de mesure et la distribution du second matériau (M2) est réalisée durant une seconde période de mesure, une durée de la première période de mesure étant égale à une durée de la seconde période de mesure, et de préférence, comprenant en outre les étapes de :

    détermination d'un rapport de mélange opérationnel ($R_{OP}$) du premier matériau (M1) et du second matériau (M2) en fonction de la quantité déterminée du premier matériau distribué durant la première période de mesure et de la quantité déterminée du second matériau distribué durant la seconde période de mesure ; et
    la détermination que le rapport de mélange opérationnel ($R_{OP}$) est en dehors d'une plage de commande de rapport prédéterminée,
    dans lequel l'ajustement automatique de la distribution des premier et second matériaux est réalisé en réponse à la détermination que le rapport de mélange opérationnel ($R_{OP}$) est en dehors de la plage de commande de rapport prédéterminée.

6.  Procédé selon la revendication 5, dans lequel la réception des paramètres opérationnels de distribution comprend la réception d'une densité ($\rho_1$) du premier matériau (M1) et d'une densité ($\rho_2$) du second matériau (M2),
    dans lequel, de préférence, le rapport de mélange cible ($R_T$) est un rapport massique, et le procédé comprend en outre la détermination d'un rapport de mélange cible volumétrique à partir du rapport massique et des densités des premier et second matériaux, dans lequel la première vitesse de fonctionnement de la première pompe à cavité progressive (112a) et la seconde vitesse de fonctionnement de la seconde pompe à cavité progressive (112b) est en outre basée sur le rapport de mélange cible volumétrique déterminé.

7.  Procédé selon la revendication 1, comprenant en outre :

    la surveillance d'une pression de système ;
    la détermination que la pression de système dévie par une quantité prédéterminée d'un seuil de pression de système prédéterminé ; et
    l'indication d'une erreur système.

8.  Procédé selon la revendication 1, comprenant en outre :

    la surveillance d'un courant fourni à au moins une des première et seconde pompes à cavité progressive (112a, 112b) ;
    la détermination que le courant dévie par une quantité prédéterminée d'un seuil de courant prédéterminé ; et
    l'indication d'une erreur système.

9.  Système de distribution (100) servant à distribuer un matériau mixte (M), qui comporte au moins un premier matériau (M1) et un second matériau (M2), sur un substrat (10), le système de distribution comprenant :

    une première alimentation (102a) configurée pour contenir le premier matériau (M1) ;
    une seconde alimentation (102b) configurée pour contenir le second matériau (M2) ;
    un système de pompes (110) comprenant :

une première pompe à cavité progressive (112a) comportant une entrée en communication fluidique avec la première alimentation et une sortie, la première pompe à cavité progressive (112a) étant configurée pour pomper le premier matériau (M1) à partir de la première alimentation à travers la sortie de la première pompe à cavité progressive (112a) à un premier débit de matériau ; et

une seconde pompe à cavité progressive (112b) comportant une entrée en communication fluidique avec la seconde alimentation et une sortie, la seconde pompe à cavité progressive (112b) étant configurée pour pomper le second matériau (M2) à partir de la seconde alimentation à travers la sortie de la seconde pompe à cavité progressive (112b) à un second débit de matériau ;

un mélangeur (130) configuré pour être connecté au système de pompes (110), le mélangeur (130) comportant :

une première entrée (124a) configurée pour être en communication fluidique avec la sortie de la première pompe à cavité progressive (112a) ;
une seconde entrée (124b) configurée pour être en communication fluidique avec la sortie de la seconde pompe à cavité progressive (112b) ; et
une chambre (135) configurée pour y mélanger le premier matériau (M1) et le second matériau (M2) ;

une buse de distribution (140) en communication fluidique avec la chambre (135), la buse de distribution (140) étant configurée pour distribuer le matériau mixte (M) ;
un capteur configuré pour déterminer une quantité du premier matériau distribué et une quantité d'un second matériau distribué ; et
une unité de commande (50) configurée pour :

déterminer un rapport de mélange opérationnel ($R_{OP}$) du premier matériau (M1) et du second matériau (M2) en fonction de la quantité déterminée du premier matériau distribué et de la quantité déterminée du second matériau distribué ;
déterminer que le rapport de mélange opérationnel ($R_{OP}$) est en dehors d'une plage de commande de rapport prédéterminée ; et
ajuster respectivement le premier débit de matériau à un premier débit de matériau ajusté et le second débit de matériau à un second débit de matériau ajusté pour commander le fonctionnement des première et seconde pompes à cavité progressive (112b) afin de distribuer le matériau mixte (M) à partir de la buse de distribution (140) sur le substrat (10).

10. Système de distribution (100) selon la revendication 9, dans lequel le capteur est une balance (20).

11. Système de distribution (100) selon la revendication 10, dans lequel l'unité de commande (50) est configurée pour :

commander le fonctionnement de la première pompe à cavité progressive (112a) pour distribuer le premier matériau (M1) sur la balance (20) et recevoir la quantité du premier matériau à partir de la balance ; et
commander le fonctionnement de la seconde pompe à cavité progressive (112b) pour distribuer le second matériau (M2) sur la balance (20) et recevoir la quantité du second matériau à partir de la balance.

12. Système de distribution (100) selon la revendication 9, dans lequel la première pompe à cavité progressive (112a) et la seconde pompe à cavité progressive (112b) sont configurées pour pomper indépendamment les premier et second matériaux respectifs de telle sorte que le rapport de mélange entre le premier matériau (M1) et le second matériau (M2) soit configuré pour être modifié.

13. Système de distribution (100) selon la revendication 9, dans lequel le système de pompes (110) comprend un premier moteur configuré pour entraîner la première pompe à cavité progressive (112a) et un second moteur configuré pour entraîner la seconde pompe à cavité progressive (112b), et l'unité de commande (50) est configurée pour commander les premier et second moteurs.

14. Système de distribution (100) selon la revendication 9, comprenant en outre un adaptateur configuré pour être connecté de manière amovible au système de pompes (110), l'adaptateur comprenant :

une première entrée (124a) configurée pour être en communication fluidique avec la sortie de la première pompe à cavité progressive (112a) ;
une seconde entrée (124b) configurée pour être en communication fluidique avec la sortie de la seconde pompe à cavité progressive (112b) ;
une première sortie (126a) ; et
une seconde sortie (126b),
dans lequel le mélangeur (130) et l'adaptateur sont configurés pour être connectés de manière interchangeable au système de pompes (110).

15. Système de distribution (100) selon la revendication 14, comprenant en outre :

un premier connecteur (200) fixé au système de pompes (110) ; et
deux seconds connecteurs (300) qui sont chacun configurés pour être connectés de manière interchangeable au premier connecteur (200), l'un des deux seconds connecteurs étant fixé au mélangeur (130) et l'autre des deux seconds connecteurs (300) étant fixé à l'adaptateur,
dans lequel, de préférence, l'unité de commande (50) est en outre configurée pour commander le fonctionnement du premier connecteur (200) afin de commander automatiquement une connexion interchangeable entre le système de pompes (110) et l'adaptateur ou le mélangeur (130), et
de préférence, le système comprenant en outre une griffe (230) configurée pour entourer une partie de chacun des deux seconds connecteurs (300) afin d'effectuer la connexion interchangeable entre le premier connecteur (200) et les deux seconds connecteurs (300) ; et un actionneur (240) configuré pour déclencher l'ouverture et la fermeture de la griffe (230) en réponse à l'unité de commande (50).

**FIG. 1**

**FIG. 2**

**FIG. 3**

**FIG. 4**

EP 3 776 133 B1

**FIG. 5**

**FIG. 6A**          **FIG. 6B**          **FIG. 6C**

FIG. 7

700

702 RECEIVE DISPENSING OPERATING PARAMETERS

704 DISPENSE FIRST MATERIAL AT FIRST FLOW RATE AND DETERMINE AMOUNT OF MATERIAL DISPENSED

706 DISPENSE SECOND MATERIAL AT SECOND FLOW RATE AND DETERMINE AMOUNT OF MATERIAL DISPENSED

708 DISPENSE RATIO WITHIN CONTROL RANGE?

NO → 710 AUTOMATICALLY DETERMINE ADJUSTED FIRST AND SECOND FLOW RATES

YES → 712 MIX FIRST AND SECOND MATERIAL AND DISPENSE MIXED MATERIAL ONTO SUBSTRATE

800

802 — Receive Dispense
Operating Parameters

804 — Calculate
Target Flow Rates

806 — Set Initial Operating
Speeds for
First and Second Pumps

808a — Determine Operating Flow Rate
of First Material

810a — Flow Rate
within
Control Range?

No → 812a — Adjust Operating
Speed of First Pump

Yes

808b — Determine Operating Flow Rate
of Second Material

810b — Flow Rate
within
Control Range?

No → 812b — Adjust Operating
Speed of Second Pump

Yes

814 — Determining Operating
Flow Rate
of Mixed Material

816 — Flow Rate
within
Control Range?

No

Yes

818 — Mix First and Second Material
and Dispense Mixed Material
on to Substrate

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016109888 A1
- US 2002014496 A1
- US 2003158630 A1
- US 5271521 A
- US 743659
- WO 20170023895 A
- US 5906682 A